# EUROPEAN PATENT APPLICATION

(11) **EP 4 756 691 A1**
(43) Date of publication of application: **10.06.2026**
(21) Application number: 24862811.7
(22) Date of filing: 04.09.2024
(51) Int. Cl.: G06Q 10/105, G06Q 10/063, G06Q 30/0203

(54) **INFORMATION PROVIDING DEVICE, METHOD, AND PROGRAM**

(30) Priority: 08.09.2023 JP 2023146429
(71) Applicant: Fancrew Inc., Tokyo 101-0032 (JP)
(72) Inventor: YAMAGUCHI, Takato, Tokyo 101-0032 (JP); TOKUDA, Shuji, Tokyo 101-0032 (JP); KUROKI, Katsumi, Tokyo 101-0032 (JP)
(74) Representative: Gulde & Partner
(86) International application number: PCT/JP2024/031657
(87) International publication number: WO 2025/053159

(57) **Abstract**

[Problem]

Provided is an information providing device, a method, and a program that allow visually obtaining a contribution degree of an evaluation factor to an employee satisfaction level or intention to remain according to evaluation attributes.

[Solution]

An information providing device includes a means configured to acquire evaluation data related to an employee satisfaction level or intention to remain; a multivariate analysis means configured to calculate contribution degrees of explanatory variables with respect to an objective variable using the employee satisfaction level or intention to remain as an objective variable, and a plurality of evaluation items in the evaluation data as explanatory variables; and a means configured to display an analysis result from the multivariate analysis means on an information terminal. The evaluation data includes an evaluation item of a first level corresponding to the objective variable, evaluation items of a second level that explain the objective variable, and evaluation items of a third level that explain evaluation items of the second level. The multivariate analysis means is configured to execute a first multivariate analysis using an evaluation value for an evaluation item of the second level as an intermediate objective variable, and using evaluation items of the third level as explanatory variables, and execute a second multivariate analysis using an evaluation item of the first level as an objective variable, and using evaluation items of the second level as explanatory variables.

## Description

### TECHNICAL FIELD

The present invention relates to an information providing device, a method, and a program for providing information contributing to a satisfaction level or an intention to remain of an employee.

### BACKGROUND ART

Conventionally, employee satisfaction surveys and employee attitude surveys are conducted by administering questionnaires to employees. For example, Patent Document 1 discloses an evaluation device configured to evaluate workplace attitudes for conducting a questionnaire categorized based on a degree of employee motivation and an evaluation of a degree of attainment of expectations regarding work. The program according to the present invention is software executable on a computer, and can be stored in a computer-readable storage medium, such as a CD-ROM, DVD, USB flash drive, HDD, and Solid State Drive (SSD). In the present invention, the employees are not limited to those engaged in tertiary industries, such as commerce, finance, and services, but also include those engaged in primary industries such as agriculture, dairy and livestock farming, forestry, and fisheries, as well as secondary industries such as manufacturing and construction. The employees also include not only those who work at physical locations (real locations), but also those who work at locations in virtual spaces, those who work from home, and non-regular employees.

### CITED DOCUMENTS

### PATENT LITERATURE

Patent Document 1: Japanese Patent No. 6438614

### DISCLOSURE OF THE INVENTION

### PROBLEMS TO BE SOLVED BY THE INVENTION

In the conventional method, although the questionnaire results are categorized and aggregated, it has not been possible to determine which factors contribute to employee satisfaction level or intention to remain, or to what extent such factors contribute.

It is an object of the present invention to provide an information providing device, a method, and a program that allow easily obtaining a contribution degree of an evaluation factor to the employee satisfaction level or intention to remain.

### SOLUTIONS TO THE PROBLEMS

The inventors invented an information providing device and a program that allow easily obtaining an effective measure to improve the employee satisfaction level or intention to remain by conducting a factor analysis of evaluation elements expected to be effective on the employee satisfaction level or intention to remain, then collecting a statistically significant number of employee evaluations, and displaying results of a statistical analysis.
[1] An information providing device comprising:
   a survey data acquisition means configured to acquire evaluation data including an evaluation value for an evaluation item related to an employee satisfaction level or intention to remain, the evaluation data including the evaluation values for a plurality of evaluation items related to the employee satisfaction level or intention to remain;
   a multivariate analysis means configured to calculate contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
   an analysis result output means configured to display an analysis result from the multivariate analysis means on an information terminal capable of communicating via a network,
   wherein the evaluation data includes an evaluation item of a first level corresponding to the objective variable, evaluation items of a second level that explain the objective variable, and evaluation items of a third level that explain evaluation items of the second level, and
   the multivariate analysis means is configured to execute a first multivariate analysis using an evaluation value for an evaluation item of the second level as an intermediate objective variable, and using evaluation items of the third level as explanatory variables, and execute a second multivariate analysis using an evaluation item of the first level as an objective variable, and using evaluation items of the second level as explanatory variables.
[2] An information providing device comprising:
   a survey data acquisition means configured to acquire evaluation data including an evaluation value for an evaluation item related to an employee satisfaction level or intention to remain, the evaluation data including the evaluation values for a plurality of evaluation items related to the employee satisfaction level or intention to remain;
   a multivariate analysis means configured to calculate contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
   an analysis result output means configured to display an analysis result from the multivariate analysis means on an information terminal capable of communicating via a network,
   wherein the analysis result output means causes the information terminal to display the plurality of explanatory variables using graphics having sizes corresponding to the contribution degree.
[3] The information providing device according to [1],
   wherein the analysis result output means causes the information terminal to display the plurality of explanatory variables using graphics having sizes corresponding to the contribution degree.
[4] The information providing device according to [2] or [3],
   wherein the analysis result output means causes the information terminal to display the graphics arranged at regular intervals in a radial manner.
[5] The information providing device according to [2] or [3], further comprising
   a correlation analysis means configured to calculate a relevance between the plurality of explanatory variables,
   wherein the analysis result output means causes the information terminal to display a line that connects a pair of the explanatory variables, and the line has a thickness and/or a type corresponding to a strength of the relevance.
[6] The information providing device according to [2] or [3], further comprising
   a correlation analysis means configured to calculate a relevance between the plurality of explanatory variables,
   wherein the analysis result output means causes the information terminal to display the graphics arranged at apexes of a regular polygon, causes the information terminal to display a line that connects a pair of the explanatory variables, and the line has a thickness and/or a type corresponding to a strength of the relevance.
[7] The information providing device according to any of [2] to [6],
   wherein the graphic is a circle, a polygon, or an illustration.
[8] The information providing device according to any of [2] to [7],
   wherein when the relevance of the pair of graphics is less than a predetermined value, the line connecting the pair of graphics is not displayed on the information terminal.
[9] The information providing device according to any of [2] to [8], further comprising
   a reference value setting means configured to set a reference value for each of the plurality of explanatory variables,
   wherein the analysis result output means causes the explanatory variables to be displayed in different colors corresponding to a difference relative to the reference value.
[10] The information providing device according to [9],
   wherein the reference value setting means has a function for calculating an average value of a score in the same or similar industry or business category calculated for each of the plurality of explanatory variables, and setting the average value to the reference value.
[11] The information providing device according to [9] or [10],
   wherein the analysis result output means colors the explanatory variable in a first color when the explanatory variable has a value higher than the reference value, and colors the explanatory variable in a second color different from the first color when the explanatory variable has a value lower than the reference value.
[12] An information providing method executed by a computer, the method comprising:
   a step of acquiring evaluation data including an evaluation value for an evaluation item related to an employee satisfaction level or intention to remain, the evaluation data including the evaluation values for a plurality of evaluation items related to the employee satisfaction level or intention to remain;
   a multivariate analysis step of calculating contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
   an analysis result output step of displaying an analysis result acquired in the multivariate analysis step on an information terminal capable of communicating via a network,
   wherein the evaluation data includes an evaluation item of a first level corresponding to the objective variable, evaluation items of a second level that explain the objective variable, and evaluation items of a third level that explain evaluation items of the second level.
[13] A program that causes a computer to function as:
   a survey data acquisition means configured to acquire evaluation data including an evaluation value for an evaluation item related to an employee satisfaction level or intention to remain, the evaluation data including the evaluation values for a plurality of evaluation items related to the employee satisfaction level or intention to remain;
   a multivariate analysis means configured to calculate contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
   an analysis result output means configured to display an analysis result from the multivariate analysis means on an information terminal capable of communicating via a network,
   wherein the evaluation data includes an evaluation item of a first level corresponding to the objective variable, evaluation items of a second level that explain the objective variable, and evaluation items of a third level that explain evaluation items of the second level.

### EFFECTS OF THE INVENTION

According to the present invention, the contribution degree of the evaluation factor to the employee satisfaction level or intention to remain can be easily obtained.

### BRIEF DESCRIPTION OF THE DRAWINGS

Fig. 1 is a block diagram of an information providing system according to a first embodiment.
Fig. 2 is a drawing describing functions of an information providing device according to the first embodiment.
Fig. 3 is a drawing illustrating an exemplary survey sheet (outline) according to the embodiment.
Fig. 4 is a drawing illustrating details of the survey sheet of Fig. 3.
Fig. 5 is a drawing describing a multivariate analysis means according to the first embodiment.
Fig. 6 is a drawing illustrating an analysis result indicating contribution degrees of respective explanatory variables with respect to an employee "satisfaction level" in the survey result related to the survey sheet of Fig. 4.
Fig. 7 is a drawing illustrating correlation coefficients between the respective explanatory variables of Fig. 6.
Fig. 8 is a drawing graphically illustrating the contribution degrees of the respective explanatory variables and the correlation coefficients of the respective explanatory variables of Fig. 6 in a radial manner using the analysis result output means according to the first embodiment.
Fig. 9 is a drawing illustrating an analysis result indicating the contribution degrees of the respective explanatory variables with respect to an employee "intention to remain" according to the first embodiment.
Fig. 10 is a drawing graphically illustrating the contribution degrees of the respective explanatory variables and the correlation coefficients of the respective explanatory variables of Fig. 9 in a radial manner using the analysis result output means according to the first embodiment.

### DESCRIPTION OF PREFERRED EMBODIMENTS

An information providing system 1 of a first embodiment is configured to display evaluation factors that affect a satisfaction level or an intention to remain of an employee using numerical values or graphical diagrams, thereby allowing easily obtaining the evaluation factors, and includes a configuration described below.

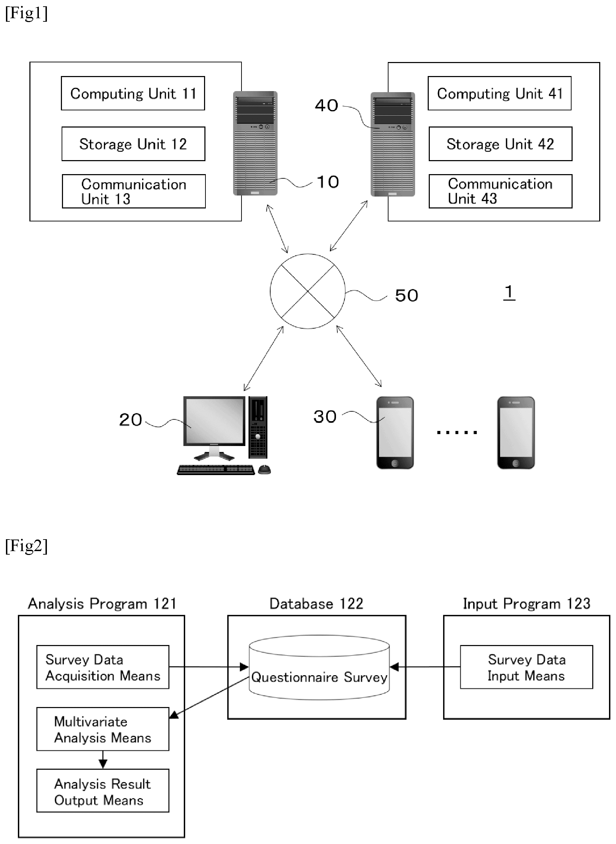

Fig. 1 is a block diagram of the information providing system according to the embodiment. As illustrated in Fig. 1, the information providing system 1 according to the embodiment includes an information providing device 10 that functions as a server, a management information terminal 20 that functions as a management client, an information terminal 30 that a questionnaire respondent uses, a survey data collecting device 40, and Internet 50. In the example illustrated in Fig. 1, while the numbers of the information providing devices 10, the management information terminals 20, and the survey data collecting devices 40 are each one, the configuration is not limited thereto, and the numbers thereof may be each two or more.

The information providing device 10 is, for example a PC server, and includes a computing unit 11, a storage unit 12 that stores an analysis program 121, and a communication unit 13 that allows communication with the information terminal 30 and the survey data collecting device 40.

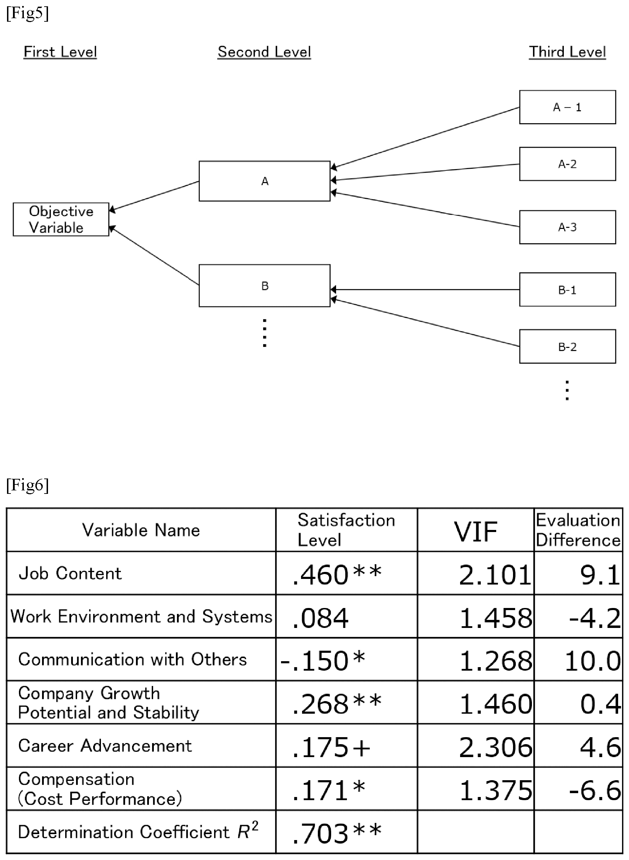

The management information terminal 20 is an information terminal for performing data input operations to the information providing device 10 and the survey data collecting device 40 and execution operations of the analysis program 121 and a survey data collection program 141, and is, for example, a personal computer. By executing the analysis program 121 described below from the management information terminal 20, a user can output various analysis results (for example, Fig. 6 to Fig. 11) to a display device of the management information terminal 20.

The information terminal 30 is an information terminal that a questionnaire respondent uses, and is used for inputting survey data to a database 122. In the example of Fig. 1, while the information terminal 30 as a smartphone is disclosed, the information terminal 30 is not limited thereto and can be configured of any information terminal, such as a personal computer and a tablet, which runs a web browser.

The survey data collecting device 40 is, for example a PC server, and includes a computing unit 41, a storage unit 42 that stores the database 122 and an input program 123, and the communication unit 13 that allows communication with the information providing device 10 and the information terminal 30. The input program 123 includes a survey data input means that provides the database 122 with a web page allowing an input of survey data from the information terminal 30.

While the embodiment employs, for acquiring the survey data, a configuration in which answers to questionnaires are input from the information terminal 30 using a web browser according to the input program 123, a configuration in which the survey data collected by other means, such as a paper medium, is processed and uploaded from the management information terminal 20 to the database 122 may be employed.

As illustrated in Fig. 2, the computing unit 11 of the information providing device 10 executes the analysis program 121 stored in the storage unit 12, thereby achieving (1) a survey data acquisition means, (2) a multivariate analysis means, and (3) an analysis result output means. The following describes each of the means.

### (1) Survey Data Acquisition Means

The survey data acquisition means is a means for storing the survey data used in the multivariate analysis means in the storage unit 12. In this embodiment, a screen to which a query for acquiring the survey data from the database 122 is input is provided to the management information terminal 20. The survey data according to the embodiment includes survey data on an employee satisfaction level.

The questionnaire survey in the embodiment is an employee questionnaire with predetermined evaluation items, and includes questions appropriate for conducting the multivariate analysis.

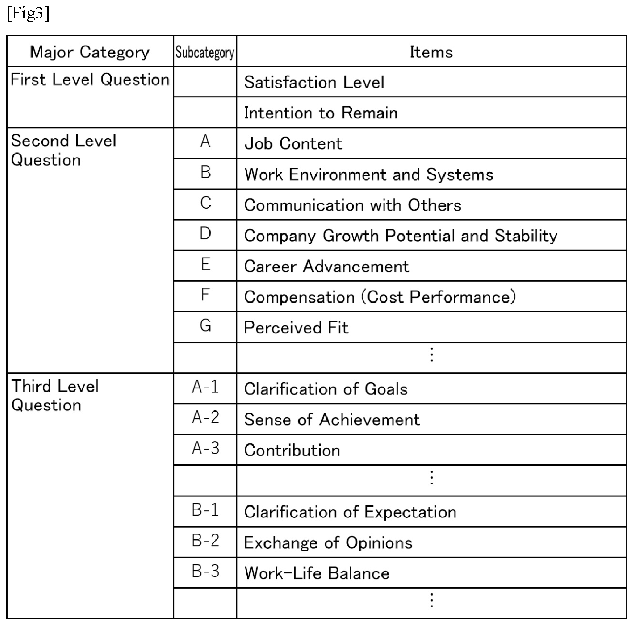

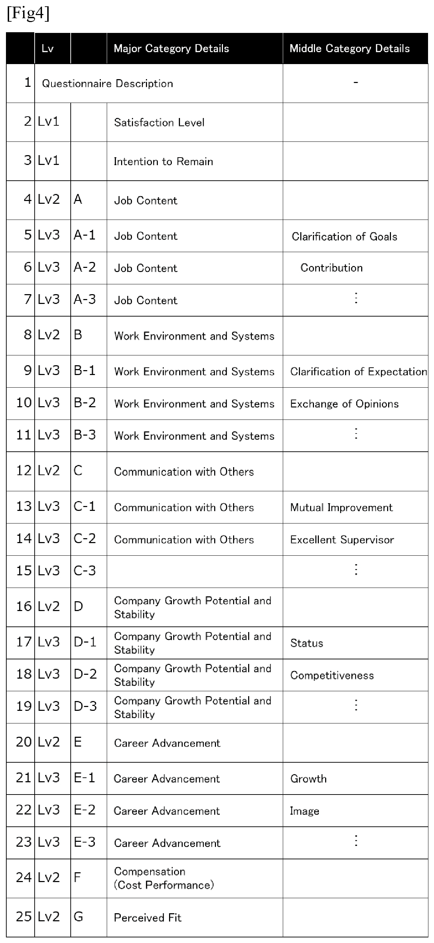

Fig. 3 is a drawing illustrating an outline of a survey sheet of the questionnaire survey according to the embodiment, and Fig. 4 is a drawing illustrating details of Fig. 3.

At the beginning of the questionnaire illustrated in Fig. 4, for example, there is an explanatory statement indicating that the responses will not be provided to the company in a form that identifies an individual, however, the questionnaire survey may also be conducted in a form that identifies individuals. A first level question includes a satisfaction level and an intention to remain. The former is a question asking about a level of the satisfaction with the company, and the latter is a question asking whether to want to continue working at the company. The first level question is used as an objective variable in a multiple regression analysis described below. Evaluations of the first level to third level questions are each a multi-level evaluation. A second level question is a factor affecting the first level question as the objective variable. For example, a question regarding contribution is a question asking about a self-perception of contribution to the company or the department. A third level question is an explanatory variable when the multiple regression analysis or a correlation analysis is conducted using the second level question as a dependent variable. For example, a question regarding an excellent supervisor (C-2) is a question that asks whether there is a supervisor to be emulated. Here, the second level question and the third level question are in a relation of a superordinate concept and a subordinate concept. For example, the subordinate concept of "job content" in a subcategory A of the second level question is "clarification of goals" and "sense of achievement" in a subcategory A of the third level question. However, the third level question is not necessarily set for all the subcategories of the second level question.

As another question corresponding to the second level question, an evaluation of perceived fit may be set. The question about the perceived fit is, for example, an evaluation in multi levels to a question about "Do you feel that this company suits for you?" In the analysis results illustrated in Fig. 6 to Fig. 10 described below, the evaluation about the perceived fit is not included for convenience of explanation.

The perceived fit in the embodiment is a preference structure of an individual A expressed as a variable, for example, a preference of an individual for an object, a feeling of preference to an option *b* over an option ***a*** of the individual A, an efficacy *b* greater than an efficacy ***a***. By including the perceived fit considering the preference of the respondent in the evaluation items, a function that allows outputting a correlation between the perceived fit and the clustered respondent attribute may be provided to the multivariate analysis means described below.

### (2) Multivariate Analysis Means

The multivariate analysis means of the embodiment analyzes how the respective evaluation items affect a score of the satisfaction level and a score of the intention to remain (hereinafter referred to as an "ES score ") by a multiple regression analysis. Here, the regression analysis is a statistical method for clarifying a relation between a value indicating result (objective variable) and a value as a factor (explanatory variable), and the multiple regression analysis means a statistical method for predicting the future by quantifying which explanatory variable influences the result and how the influence is when explaining the objective variable.

Quantifying the magnitude of the influence of the explanatory variable through the multiple regression analysis facilitates designing an improvement method. Further, the future of the variation of the objective variable due to the expected variation of the explanatory variable can be predicted.

Fig. 5 is a drawing describing the multivariate analysis means according to the embodiment.

The multivariate analysis means of the embodiment conducts (a) the multiple regression analysis of the second level and the third level, (b) an analysis of a simple correlation of the evaluation factors in the third level, (c) the multiple regression analysis of the first level and the second level, and (d) an analysis of a simple correlation of the evaluation factors in the second level. In this embodiment, by conducting a hierarchical multiple regression analysis, an explanatory power of the influence (contribution degree) of the evaluation factor of the second level on the employee satisfaction level or intention to remain can be enhanced. In other words, when the multiple regression analysis is conducted using the evaluation factor of the third level as the explanatory variable and the evaluation value for the evaluation item of the first level as the objective variable, it cannot be accurately obtained which evaluation factor is dominant in some cases, but in this embodiment, this problem is solved by setting the evaluation factor of the second level as an intermediate concept.

The analysis (a) is a first multiple regression analysis using the evaluation items of the second level as the objective variables (intermediate objective variables) and the evaluation items of the third level as the explanatory variables. This analysis allows obtaining the evaluation item (evaluation factor) of the third level that affects the evaluation item (intermediate objective variable) of the second level. For example, in Fig. 3, the influence (contribution degree) of each of the clarification of goals (A-1) and the evaluation of contribution (A-2) on the evaluation of job content (A) can be quantified.

In the analysis (b), the correlation between the evaluation factors of the third level is quantified. For example, in the case where the high correlation between the clarification of goals (A-1) and the evaluation of contribution (A-2) is recognized by the simple correlation analysis method, it is found that when the evaluation of one becomes better, the evaluation of the other also becomes better.

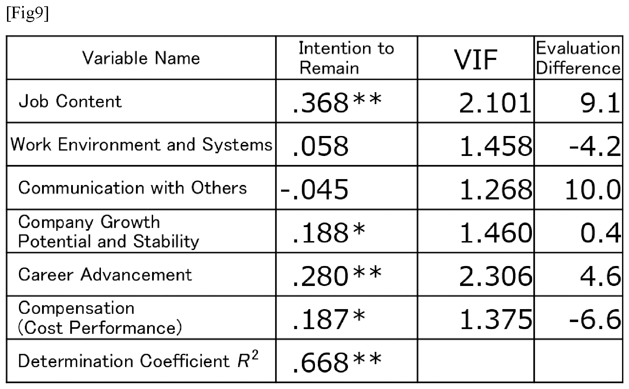

The analysis (c) is a second multiple regression analysis using the evaluation item of the first level as the objective variable and the evaluation items of the second level as the explanatory variables. This analysis allows obtaining the evaluation item (evaluation factor) of the second level that affects the evaluation item of the first level. For example, the influence (contribution degree) of each of (A) the evaluation of job content, (B) the evaluation of work environment and systems, (C) the evaluation of communication with others, (D) the evaluation of company growth potential and stability, (E) the evaluation of career advancement opportunities, and (F) the compensation (cost performance) on the satisfaction level or the intention to remain can be quantified (see Fig. 6 and Fig. 9).

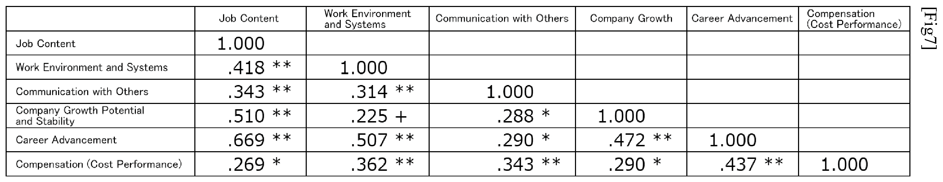

In the analysis (d), the correlation coefficient obtained by quantifying the correlation between the evaluation factors of the second level is calculated. Fig. 7 is a table indicating the correlation coefficient obtained by quantifying the correlation between the evaluation factors of the second level illustrated in Fig. 6 by the simple correlation analysis method. For example, it is seen from Fig. 7 that the high correlation of .669 is recognized between (A) the evaluation of job content and (E) the evaluation of career advancement opportunities, and when the evaluation of one becomes better, the evaluation of the other also becomes better.

Fig. 6 is a drawing illustrating an example of the result of calculating the contribution degrees of the respective explanatory variables by the multiple regression analysis when the objective variable is set to the "satisfaction level" in the survey result related to the survey sheet of Fig. 4. Here, Variance Inflation Factor (VIF) is an indicator in an evaluation of multicollinearity in the multiple regression analysis. The multicollinearity indicates a high relevance between the explanatory variables, and when the VIF has a large value, it is considered that the variable is to be removed from the analysis. Here, a determination coefficient (R²) is an indicator that indicates how the predicted value of the objective variable obtained through the multiple regression analysis matches the actual value of the objective variable. Generally, the closer the determination coefficient is to 1, the higher the explanatory power is. In the example illustrated in Fig. 6, it is seen that the "job content" has the highest contribution degree to the satisfaction level, followed by the "company growth potential and stability". In Fig. 6, since the values of VIF of the respective explanatory variables are not large, it is seen that the problem of multicollinearity has not occurred. In Fig. 6, since the determination coefficient R² is .703 and large, it is seen that the analysis provides a high explanatory power.

The multivariate analysis means according to the embodiment further has a function of calculating an evaluation difference relative to a comparison target score (for example, an average score of each evaluation item in an employee satisfaction questionnaire in the same or similar industry or business category; hereinafter referred to as a "reference score"). As illustrated in Fig. 6, by examining the evaluation difference relative to the reference score calculated for each explanatory variable, it is possible to understand strengths and weaknesses of the company in comparison with other companies.

### (3) Analysis Result Output Means

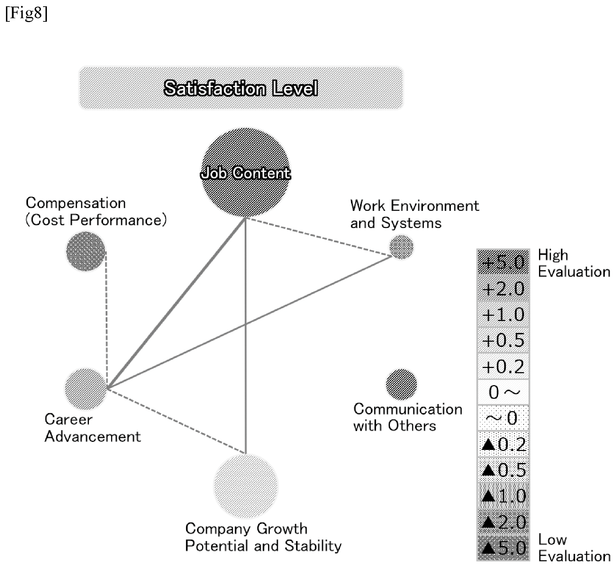

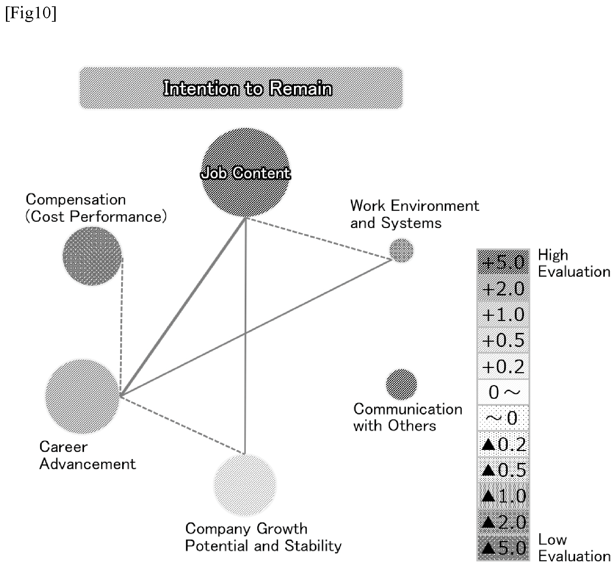

The analysis result output means of the embodiment is configured not only to output the analysis result in the table format as illustrated in Figs. 6, 7, and 9, but also to allow the contribution degree of the explanatory variable relative to the objective variable (ES score) to be visually obtained by graphically displaying the contribution degree (see Figs. 8 and 10). In this embodiment, each explanatory variable is graphically displayed as a circle having a size proportional to the contribution degree to the ES score. In this embodiment, the circle is illustrated with a predetermined minimum radius when the contribution degree is equal to or less than a predetermined value, and the circle does not have a size equal to or smaller than the minimum radius. The circle size need not necessarily be proportional to the numerical value of the contribution degree, and an emphasis display may be performed (for example, the top two explanatory variables may be displayed in an enlarged manner by multiplying their contribution degrees by a coefficient.

The analysis result output means has a function of coloring the explanatory variable having a score higher than the reference score with a first color and coloring the explanatory variable having a score lower than the reference score with a second color. This embodiment is configured such that the average score of the evaluation value of the respondent is calculated for each explanatory variable, the explanatory variable having the average score higher than the reference score is colored green (diagonal lines) and displayed, and the explanatory variable having the average score lower than the reference score is colored red (dots) and displayed. Here, this embodiment is configured such that the coloring is drawn more darkly as the difference between the average score and the reference score of the explanatory variable becomes larger.

This embodiment is configured such that the explanatory variables having a specific correlation coefficient are displayed as being connected by correlation-degree indication lines. That is, the analysis result output means can display the correlation-degree indication line that connects a pair of graphics corresponding to the explanatory variables using a line having a thickness and/or a line type corresponding to the value of the correlation coefficient (strength of relevance). Any rule can be set for the display method of the correlation-degree indication line, and for example, upper-ranked pairs of values whose rounded minimum significant digit becomes 0.4 or more may be displayed. In this embodiment, a rule is adopted in which the correlation-degree indication line is displayed as a double line when the rounded minimum significant digit is 0.7 or more, displayed as a thick solid line when the rounded minimum significant digit is less than 0.7 and 0.6 or more, displayed as a normal solid line when the rounded minimum significant digit is less than 0.6 and 0.5 or more, displayed as a thin dotted line when the rounded minimum significant digit is less than 0.5 and 0.4 or more, and is not displayed when the rounded minimum significant digit is less than 0.4.

Fig. 8 is a drawing graphically illustrating the contribution degrees of the respective explanatory variables and the correlation coefficients of the respective explanatory variables when the objective variables illustrated in Fig. 6 are expressed as the satisfaction level in a radial manner using the analysis result output means. In Fig. 8, the diagonal line indicates green as the first color, and the dot indicates red as the second color. In Fig. 8, since the "compensation (cost performance)" and the "work environment and systems" are colored red, it is possible to immediately perceive that the average scores thereof are particularly lower than the reference scores.

In Fig. 8, each explanatory variable is illustrated as a circle having a size corresponding to a numerical value of the contribution degree relative to the satisfaction level. From the size of the circle in Fig. 8, it is seen that the "job content" has the strongest influence on the satisfaction level, followed by the "company growth potential and stability." In this embodiment, the circles corresponding to the respective explanatory variables are arranged at apexes of a regular hexagon, but the drawing method is not limited thereto, the circles may be arranged at apexes of any regular polygon corresponding to the number of the explanatory variables, or may be arranged at regular intervals on a circumference. The arrangement order of graphics indicating the explanatory variables may be changed by a drag operation.

In Fig. 8, the degree of correlation between the explanatory variables can be visually obtained from the thickness and the type of the correlation-degree indication line that connects the explanatory variables. For example, it is possible to perceive that the "career advancement" has a strong influence on the "job content" connected thereto by the solid line of correlation-degree indication line.

Thus, by graphically displaying the correlation coefficients of the respective explanatory variables using the correlation-degree indication lines that are different in thickness and type, the factor that affects the satisfaction level of the employee can be easily obtained. The number of the correlation-degree indication lines connecting between the explanatory variables is not limited to the number illustrated in the example, and any number of the correlation-degree indication lines may be displayed.

In this embodiment, the explanatory variable is indicated using the circle having the size proportional to the contribution degree, but the graphic indicating the contribution degree is not limited thereto and may be any graphic, for example, a polygon, or an illustration of food or a character. The arrangement order of graphics indicating the explanatory variables may be changed by a drag operation. A function for sorting the arrangement order of the explanatory variables in ascending order or descending order based on the contribution degree, or in ascending order or descending order based on the score may be added.

Fig. 9 is a drawing illustrating an analysis result indicating the contribution degrees of the respective explanatory variables (evaluation factors) of the second level when the objective variable is set to the "intention to remain". In the example illustrated in Fig. 9, it is seen that the "job content" has the highest contribution degree to the intention to remain, followed by the "career advancement." Since the values of VIF of the respective explanatory variables are not large, it is seen that the problem of multicollinearity has not occurred. In Fig. 9, since the determination coefficient R² is .668, it is seen that the analysis provides a high explanatory power. Further, in Fig. 9, similarly to Fig. 6, the evaluation difference relative to the reference score is also calculated for each explanatory variable.

Fig. 10 is a drawing graphically illustrating the contribution degrees of the respective explanatory variables and the correlation coefficients of the respective explanatory variables illustrated in Fig. 9 in a radial manner (apexes of a regular hexagon) using the analysis result output means. In Fig. 10, the diagonal line indicates green as the first color, and the dot indicates red as the second colors.

In Fig. 10, since only the "compensation (cost performance)" and the "work environment and systems" are colored red, it is possible to immediately perceive that only these have scores lower than the reference scores (for example, an average value in the same industry or in a different industry). Since the intention to remain, the job content, the career advancement, and the communication with others are darkly colored, it is seen that they have scores significantly higher than the reference score.

It is similar to Fig. 8 that two explanatory variables are connected by the correlation-degree indication line having the thickness and the type corresponding to the value of the correlation coefficient.

As described above, according to the information providing system 1 according to the embodiment, by graphically visualizing and providing the analysis result obtained by the multivariate analysis of the objective variable and the explanatory variable (evaluation factor), the objective variable for efficiently performing improvement efforts can be instantaneously grasped.

By graphically visualizing and providing the explanatory variable having the high correlation coefficient, it becomes possible to easily predict the degree of influence when the explanatory variable is improved.

While the examples of the preferred embodiments of the present invention are described above, the technical scope of the present invention is not limited to the description of the embodiments. Various changes and modifications can be made in the examples of the embodiments, and configurations with the changes and modifications are also included in the technical scope of the present invention.

For example, the above-described embodiment exemplifies the configuration in which the contribution degrees of the respective evaluation factors with respect to the ES score is obtained using the multiple regression analysis in the multivariate analysis, however, the configuration is not limited thereto, and a principal component analysis, a factor analysis, a correspondence analysis, a multidimensional scaling method, a cluster analysis, a path analysis, a variance analysis, a conjoint analysis, a regression analysis, a logistic regression analysis, and the like may be used.

In addition to the above-described embodiment, the information providing device 10 can have a configuration in which the evaluation factor contributing to the ES score is analyzed by collecting condition information, for example, respondent attribute and work location, and taking the condition information into consideration. By adding graphic attributes or psychographic attributes to the questionnaire, it is also possible to perform analysis according to respondent attributes.

In the above-described embodiment, an example in which by conducting a hierarchical multiple regression analysis, an explanatory power of the influence (contribution degree) of the evaluation factor on the ES score is enhanced is described, but the technical idea of the present invention is also applicable to multivariate analysis using evaluation factors that are not hierarchical.

### DESCRIPTION OF REFERENCE SIGNS

- 1:: Information providing system
- 10:: Information providing device
- 20:: Management information terminal
- 30:: Information terminal
- 40:: Survey data collecting device
- 50:: Internet

## Claims

1. An information providing device comprising:
a survey data acquisition means configured to acquire evaluation data including an evaluation value for an evaluation item related to an employee satisfaction level or intention to remain, the evaluation data including the evaluation values for a plurality of evaluation items related to the employee satisfaction level or intention to remain;
a multivariate analysis means configured to calculate contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
an analysis result output means configured to display an analysis result from the multivariate analysis means on an information terminal capable of communicating via a network,
wherein the evaluation data includes an evaluation item of a first level corresponding to the objective variable, evaluation items of a second level that explain the objective variable, and evaluation items of a third level that explain evaluation items of the second level, and
the multivariate analysis means is configured to execute a first multivariate analysis using an evaluation value for an evaluation item of the second level as an intermediate objective variable, and using evaluation items of the third level as explanatory variables, and execute a second multivariate analysis using an evaluation item of the first level as an objective variable, and using evaluation items of the second level as explanatory variables.

2. An information providing device comprising:
a survey data acquisition means configured to acquire evaluation data including an evaluation value for an evaluation item related to an employee satisfaction level or intention to remain, the evaluation data including the evaluation values for a plurality of evaluation items related to the employee satisfaction level or intention to remain;
a multivariate analysis means configured to calculate contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
an analysis result output means configured to display an analysis result from the multivariate analysis means on an information terminal capable of communicating via a network,
wherein the analysis result output means causes the information terminal to display the plurality of explanatory variables using graphics having sizes corresponding to the contribution degree.

3. The information providing device according to claim 1,
wherein the analysis result output means causes the information terminal to display the plurality of explanatory variables using graphics having sizes corresponding to the contribution degree.

4. The information providing device according to claim 2 or 3,
wherein the analysis result output means causes the information terminal to display the graphics arranged at regular intervals in a radial manner.

5. The information providing device according to claim 2 or 3, further comprising
a correlation analysis means configured to calculate a relevance between the plurality of explanatory variables,
wherein the analysis result output means causes the information terminal to display a line that connects a pair of the explanatory variables, and the line has a thickness and/or a type corresponding to a strength of the relevance.

6. The information providing device according to claim 2 or 3, further comprising
a correlation analysis means configured to calculate a relevance between the plurality of explanatory variables,
wherein the analysis result output means causes the information terminal to display the graphics arranged at apexes of a regular polygon, causes the information terminal to display a line that connects a pair of the explanatory variables, and the line has a thickness and/or a type corresponding to a strength of the relevance.

7. The information providing device according to claim 2 or 3,
wherein the graphic is a circle, a polygon, or an illustration.

8. The information providing device according to claim 2 or 3,
wherein when the relevance of the pair of graphics is less than a predetermined value, the line connecting the pair of graphics is not displayed on the information terminal.

9. The information providing device according to claim 2 or 3, further comprising
a reference value setting means configured to set a reference value for each of the plurality of explanatory variables,
wherein the analysis result output means causes the explanatory variables to be displayed in different colors corresponding to a difference relative to the reference value.

10. The information providing device according to claim 9,
wherein the reference value setting means has a function for calculating an average value of a score in the same or similar industry or business category calculated for each of the plurality of explanatory variables, and setting the average value to the reference value.

11. The information providing device according to claim 9,
wherein the analysis result output means colors the explanatory variable in a first color when the explanatory variable has a value higher than the reference value, and colors the explanatory variable in a second color different from the first color when the explanatory variable has a value lower than the reference value.

12. An information providing method executed by a computer, the method comprising:
a step of acquiring evaluation data including an evaluation value for an evaluation item related to an employee satisfaction level or intention to remain, the evaluation data including the evaluation values for a plurality of evaluation items related to the employee satisfaction level or intention to remain;
a multivariate analysis step of calculating contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
an analysis result output step of displaying an analysis result acquired in the multivariate analysis step on an information terminal capable of communicating via a network,
wherein the evaluation data includes an evaluation item of a first level corresponding to the objective variable, evaluation items of a second level that explain the objective variable, and evaluation items of a third level that explain evaluation items of the second level, and
the multivariate analysis step includes executing a first multivariate analysis using an evaluation value for an evaluation item of the second level as an intermediate objective variable, and using evaluation items of the third level as explanatory variables, and executing a second multivariate analysis using an evaluation item of the first level as an objective variable, and using evaluation items of the second level as explanatory variables.

13. A program that causes a computer to function as:
a survey data acquisition means configured to acquire evaluation data including an evaluation value for an evaluation item related to an employee satisfaction level or intention to remain, the evaluation data including the evaluation values for a plurality of evaluation items related to the employee satisfaction level or intention to remain;
a multivariate analysis means configured to calculate contribution degrees of explanatory variables with respect to an objective variable by conducting a multivariate analysis based on the evaluation data, using the evaluation value for the employee satisfaction level or intention to remain as the objective variable, and using the evaluation values for the plurality of evaluation items in the evaluation data as a plurality of explanatory variables; and
an analysis result output means configured to display an analysis result from the multivariate analysis means on an information terminal capable of communicating via a network,
wherein the evaluation data includes an evaluation item of a first level corresponding to the objective variable, evaluation items of a second level that explain the objective variable, and evaluation items of a third level that explain evaluation items of the second level, and
the multivariate analysis means is configured to execute a first multivariate analysis using an evaluation value for an evaluation item of the second level as an intermediate objective variable, and using evaluation items of the third level as explanatory variables, and execute a second multivariate analysis using an evaluation item of the first level as an objective variable and using evaluation items of the second level as explanatory variables.
